# EUROPEAN PATENT SPECIFICATION

(11) **EP 2 041 431 B1**
(45) Date of publication and mention of the grant of the patent: **19.06.2013**
(21) Application number: 07766295.5
(22) Date of filing: 18.07.2007
(51) Int. Cl.: F03H 1/00, B64G 1/40

(54) **ELECTRIC PROPULSION SYSTEM**
ELEKTRISCHES ANTRIEBSSYSTEM
SYSTÈME DE PROPULSION ÉLECTRIQUE

(30) Priority: 19.07.2006 GB 0614342
(43) Date of publication of application: 01.04.2009
(73) Proprietor: QinetiQ Limited, Farnborough Hampshire GU14 0LX (GB)
(72) Inventor: WALLACE, Neil, Charles, Farnborough, Hampshire GU14 0LX (GB)
(74) Representative: Day, Caroline Margaret
(86) International application number: PCT/GB2007/002728
(87) International publication number: WO 2008/009938

(56) References cited:
- WO-A-2007/065915
- US-A- 5 439 191
- US-A- 5 711 348
- US-A1- 2003 102 402
- US-B1- 6 173 565

## Description

The invention relates to electric propulsion (EP) systems.

EP systems provide small amounts of thrust by high-speed ejection of accelerated ions from an ion engine, and find application in areas such as satellite and space-probe propulsion and satellite station-keeping. The ejected ions act as a propellant in the same way as the combustion products of a chemical rocket. Although the absolute amount of thrust produced by an EP system is very small compared to that of a chemical rocket, the very high velocity with which ions are ejected from the ion engine of an EP system means that the amount of thrust per unit mass flow rate is very large compared to that of a chemical rocket. For example, the Boeing^{®} 702 EP system produces a thrust of 165 mN and has a mass flow rate of approximately 4.4 mg s⁻¹, corresponding to a propellant ejection velocity of approximately of 37.5 km s⁻¹. In contrast, a main hydrogen/oxygen engine on a NASA space shuttle produces a thrust on the order of 2 MN and has a mass flow rate of approximately 700 kg s⁻¹, combustion products being expelled at velocity of 2.8 km s⁻¹.

Different types of EP system, produce different levels of thrust range and thrust resolution. For example a field-effect EP (FEEP) system produces several µN of thrust and is capable of µN resolution. The maximum thrust level is however very limited unless multiple systems are employed in parallel. A gridded ion engine system (GIE), such as the QinetiQ^{®} T5, can produce a thrust of several tens of mN but thrust resolution is limited to 10µN. Furthermore it is not possible to reduce the thrust of a GIE below a certain minimum level. However, in some applications there is a requirement for EP systems which can produce thrusts on the order of mN with sub-µN resolution and which also have the ability to throttle down from mN thrust levels to zero. Such applications include extremely fine control of the relative positions of spacecraft or satellites in constellations. However, existing EP technologies cannot deliver this functionality. In the case of existing GIE technology, this is due to the fact that thrust control is achieved by control of the ion generation process. This mechanism is inherently difficult and complex to control with precision because it is a relatively high power process.

Also, it imposes severe requirements on other elements of the EP system, particularly those providing propellant control and power conditioning and control. Such requirements significantly increase the cost and mass of an EP system. The ability to thrust from mN levels down to zero is currently not realisable in any existing EP technology because it is not possible to control and sustain ion generation to the extent that the thrust is zero.

Described herein is an EP system comprising a plasma chamber having an output aperture, acceleration and screen grids located at the output aperture and means for adjusting the electric field between the acceleration and screen grids.

By changing the electric field between the acceleration and screen grids, the ion current output from the output aperture may be accurately controlled to provide a high degree of thrust resolution. With constant plasma density in the plasma chamber and constant electric field between the acceleration and screen grids, a plasma sheath forms on the interior side of the screen grid. The surface area of the sheath represents the area over which ions can be collected and therefore the number that can be extracted. If the electric field strength is increased, the plasma sheath extends, increasing the area over which ions are collected and increasing the rate of ion extraction. System mass, cost and complexity savings are achieved over the prior art because sub-µN thrust resolution is realised without the need for very precise regulation of un-ionised propellant flow and electronics controlling ion-generation.

The means for adjusting the electric field between the acceleration and screen grids may comprise means for adjusting the potential of the acceleration grid. Preferably, means are also provided for maintaining the screen grid at a constant potential. This keeps constant the velocity at which ions are ejected from the output aperture, providing further thrust control and resolution. The potential of the screen grid may be maintained by a simple ground-referenced low-power voltage source, incorporation of which has a negligible impact on the system's mass, cost and dissipation.

US 2003/0102402 describes an ion generation and acceleration system which incorporates an accelerator voltage tracking.

An aspect of the invention provides an EP system comprising a plasma chamber having first and second output apertures, first acceleration and screen grids located at the first output aperture and second acceleration and screen grids located at the second output aperture, the system further comprising means for adjusting respective electric fields between the first acceleration and screen grids and between the second acceleration and screen grids, and being arranged for expulsion of ions from the first and second apertures in respective directions that are substantially anti-parallel.

This provides an EP system capable of producing net thrusts of the order of a few tens of µN in either of the two directions. Sub-µN thrust resolution is achieved by adjusting the two electric fields so that slightly different ion beam currents are output from the two output apertures. A GIE with sub-µN thrust resolution is thus provided which can thrust in either of two opposing directions. Hitherto, such functionality has required two µN systems (e.g. two FEEP devices) facing in opposing directions. The net thrust of the system may be throttled down to zero because it is independent of the absolute values of the ion currents extracted from each aperture. Zero net thrust is achieved when the ion currents extracted from the two apertures are equal.

Preferably, the means for adjusting the two electric field comprises means for maintaining the first and second screen grids at a constant potential and means for independently adjusting the potentials of the first and second acceleration grids. Again, this ensures that the velocity with which ions are ejected from the output apertures remains constant, with thrust being controlled only by adjustment of the rate at which ions are expelled from the two output apertures. A common power supply may be used to maintain the first and second screen grids at a constant potential: this arrangement also has the advantage that a failure in the power supply results in simultaneous termination of ion expulsion from both apertures, avoiding a sudden changes in net thrust in this eventuality.

Either the first screen grid or the second screen grid may be provided with grid closing means arranged to allow opening and closing of apertures of that screen grid. This allows a single EP system of the invention to operate in two thrust regimes: one providing thrust in the mN range in one direction and the other providing thrust on the order of a few µN in either direction together with the capability to continuously thrust down to zero thrust.

If both the first and second screen grids are provided with respective grid-closing means, mN or µN thrusts in either of the two directions may be obtained. Conventionally, four EP systems of two different types are employed to provide thrust at these two levels in either of two directions, for example two FEEP systems to provide µN of thrust and two GIEs to provide mN of thrust.

As an alternative to grid-closure means, some other way may be used to cancel ion extraction from an aperture. For example the potential of the acceleration and screen grids at that aperture may be set to zero volts.

The plasma chamber may have third and fourth output apertures, the system further comprising third and fourth acceleration and screen grids located at the third and fourth output apertures respectively and means for adjusting respective electric fields between the third acceleration and screen grids and between the fourth acceleration and screen grids, and the system being arranged for expulsion of ions from the third and fourth output apertures in respective directions that are substantially anti-parallel and substantially orthogonal to the directions in which ions are expelled from the first and second output apertures.

By adjusting the electric fields between pairs of acceleration and screen grids, resultant thrusts at the µN level may be achieved with sub-µN resolution in any direction within a plane containing the four output apertures. For reasons set out above, preferably means are provided for maintaining the four screen grids at a constant potential (for example by use of a common power supply), and for allowing independent adjustment of the respective potentials of the four acceleration grids.

If each of the four screen grids is provided with grid-closing means, the system is able to produce thrusts both at the mN and µN level in any direction in a plane containing the four output apertures.

In embodiments of the invention having a screen grid provided with grid-closing means, conveniently such means comprises an array of ion-blocking elements, each ion-blocking element having dimensions similar to that of an aperture in the acceleration grid, and means for moving elements of the array into an out of alignment with apertures in the screen grid. A simple mechanical actuator may then be used to effect opening and closing of apertures in the acceleration grid.

To provide even further flexibility in thrust direction, an EP system of the invention may incorporate further pairs of output apertures, the system being arranged to produce further pairs of substantially anti-parallel beams of ions from these apertures. Resultant thrusts over 4π steradians may thus be achieved by adjusting the differential ion currents of pairs of anti-parallel ion beams.

Embodiments of the invention are described below with reference to the accompanying drawings in which:
- Figure 1: schematically illustrates a first example electric propulsion (EP) system of the invention;
- Figure 2: shows a screen grid of the Figure 1 system;
- Figure 3: shows two elements of the Figure 2 grid;
- Figure 4: shows the Figure 2 elements in use with grid-closing means; and
- Figure 5: schematically illustrates a second example EP system of the invention.

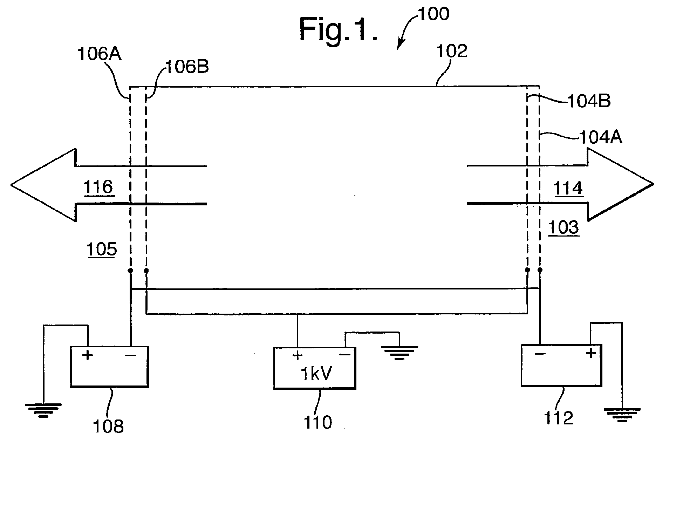

In Figure 1, an electric propulsion system 100 of the invention comprises a plasma chamber 102 having first 103 and second 105 output apertures. A first acceleration grid 104A and a first screen grid 104B are positioned at the first output aperture 103. A second acceleration grid 106A and a second screen grid 106B are positioned at the second output aperture 105. The EP system 100 also comprises means (not shown) for generating a plasma in the plasma chamber 102. Such means could comprise a heated cathode and means for accelerating electrons emitted therefrom. Alternatively, such means could comprise a coil applied to the external surface of the plasma chamber 102 and means for passing a high-frequency alternating current through the coil. Screen grids 104B, 106B are maintained at a positive voltage (e.g. +1kV) by a common voltage supply 110. Acceleration grids 104A, 106A are operated at negative potentials by variable and independent voltage supplies 112, 108 respectively.

In use of the EP system 100, grids 104A, 104B act to extract ions from a plasma formed in the chamber 102 and expel them at high velocity as an ion output current in the direction of arrow 114, producing a thrust on the engine 100 in the opposite direction. The magnitude of the thrust may be controlled by adjusting the supply 112 to control the ion output current from the output aperture 103. Similarly, grids 106A, 106B operate to extract ions from the chamber 102 and expel them as a second ion output current in the direction of arrow 116 to produce a thrust on the engine in the opposite direction.

By suitably adjusting the voltage supplies 108, 112 the ion currents output from the apertures 103, 105 may be made slightly different to produce a small resultant thrust on the EP system 100. For example a difference of 17µA between the two ion currents produces a net thrust on the EP system 100 of approximately 1µN.

Ions are accelerated out of the plasma chamber 102 due to the negative potential gradient between the first screen 104B and acceleration 104A grids, and the negative potential gradient between the second screen 106B and acceleration 106A grids. The EP system 100 also comprises means (not shown) for ejecting a neutralising beam of electrons. The negative potentials applied to the acceleration grids 104A, 106A prevent these electrons re-entering the plasma chamber 102.

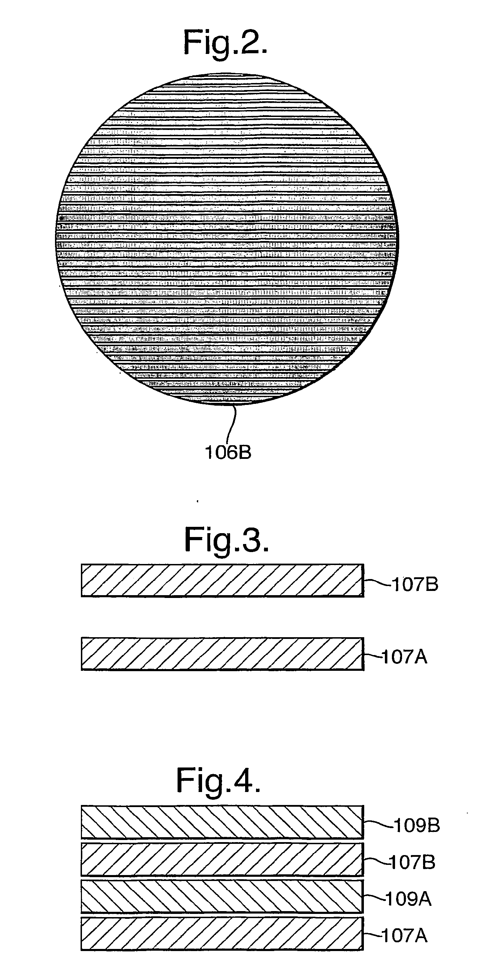

Referring to Figure 2, screen grid 106B comprises a series of spaced, parallel metallic elements defining a series of like apertures. Figure 3 shows two adjacent elements 107A, 107B of the screen grid 106B. The screen grid 106B is provided with a closure grid (not shown in Figure 1), which comprises an array of spaced, parallel ion-blocking metallic elements disposed parallel to those of screen grid 106B. Actuation means (not shown) are provided which may be operated to displace the closure grid with respect to the screen grid 106B so that apertures of the latter are closed off to prevent ions being expelled from output aperture 105. The EP system 100 may thus be switched from an operating regime wherein the EP system 100 provides thrusts on the order of a few µN (in one or other of directions 114, 116) with sub-µN resolution, to a regime wherein the system 100 provides thrusts up to a few mN in the direction 116. Figure 4 shows two elements 109A, 109B of the closure grid when in a displaced position with respect to elements 107A, 107B of screen grid 106B, thus closing off apertures of the latter.

In order to allow thrusts at the mN level to be generated in either of the directions 114, 116, screen grid 104B may also be provided with a closure grid.

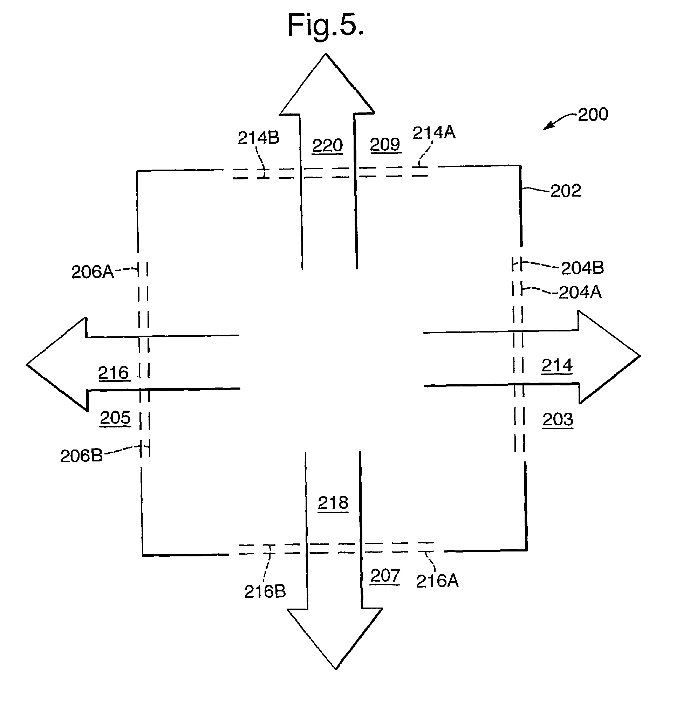

A second example EPsystem of the invention is indicated generally by 200 in Figure 5. The EP system 200 comprises a plasma chamber 202 having four output apertures 203, 205, 207, 209. Pairs of screen and acceleration grids 204B, 204A, 206B, 206A, 214B, 214A, 216B, 216A are provided at apertures 203, 205, 207, 209 respectively. A single power supply (not shown) is connect to each of the four screen grids 204B, 206B, 214B, 216B. By adjusting the potential of the acceleration grids 204A, 206A, 214A, 216A, the system 200 may be operated to provide ion output currents in each of four directions 214, 216, 218, 220. Resultant µN thrusts with sub-µN resolutions can be developed in any direction in the plane of Figure 5 may be achieved by suitable control of the potentials of acceleration grids 204A, 206A, 214A, 216A.

Screen grids 204B, 206B, 214B; 216B are provided with respective closure grids and actuation means (not shown) arranged for closing and opening apertures of acceleration grids 204B, 206B, 214B, 216B. By closing the apertures of pairs of screen grids:
204B, 214B;
204B, 216B;
216B, 206B;
206B, 214B;
thrust at the mN level may be provided in any direction in the plane of Figure 5.

## Claims

1. An electric propulsion system comprising a plasma chamber (102) having first (103) and second (105) output apertures, first acceleration and screen grids (104A,104B) located at the first output aperture and second acceleration and screen grids (106A,106B) located at the second output aperture, the system further comprising means (108,112) for adjusting respective electric fields between the first acceleration and screen grids and between the second acceleration and screen grids, and wherein the system is arranged for expulsion of ions from the first and second apertures in respective directions (114,116) that are substantially anti-parallel.

2. An electric propulsion system according to Claim 1 wherein the means for adjusting said respective electric fields comprises means for maintaining the first and second screen grids at a constant potential and means for independently adjusting the potentials of the first and second acceleration grids.

3. An electric propulsion system according to Claim 2 wherein the means for maintaining the first and second screen grids at a constant potential comprises a power supply connected to both the first and second screen grids.

4. An electric propulsion system according to any of Claims 1 to 3 wherein either the first screen grid or the second screen grid is provided with grid-closing means arranged to allow opening and closing of apertures of that screen grid.

5. An electric propulsion system according to any of Claims 1 to 3 wherein both the first screen grid and the second screen grid are provided with respective grid-closing means arranged to allow opening and closing of apertures of the first and second screen grids.

6. An electric propulsion system according to any preceding claim wherein the plasma chamber has third and fourth output apertures and third and fourth acceleration and screen grids located at the third and fourth output apertures respectively, the system further comprising means for adjusting respective electric fields between the third acceleration and screen grids and between the fourth acceleration and screen grids, and wherein the system is arranged for expulsion of ions from the third and fourth output apertures in respective directions that are substantially anti-parallel and substantially orthogonal to the directions in which ions are expelled from the first and second output apertures.

7. An electric propulsion system according to Claim 6 wherein the means for adjusting said electric fields comprises means for maintaining the screen grids at a constant potential and means for independently adjusting the respective potentials of the acceleration grids.

8. An electric propulsion system according to Claim 7 wherein the means for maintaining the screen grids at a constant potential comprises a power supply connected to each screen grid.

9. An electric propulsion system according to any one of Claims 6 to 8 wherein each screen grid is provided with grid-closing means arranged to allow opening and closing of apertures of that screen grid.

10. An electric propulsion system according to any one of Claims 4, 5 or 9 wherein each grid-closing means comprises an array of ion-blocking elements, each ion-blocking element having dimensions similar to that of an aperture in the corresponding screen grid and wherein the grid-closing means further comprises means for moving blocking elements of the array into and out of alignment with apertures in the screen grid.

## Patentansprüche

1. Elektrisches Antriebssystem, das eine Plasmakammer (102) mit einer ersten (103) und einer zweiten (105) Ausgangsöffnung, einem ersten Beschleunigungsgitter und einem ersten Schirmgitter (104A, 104B), die an der ersten Ausgangsöffnung angeordnet sind, und einem zweiten Beschleunigungsgitter und einem zweiten Schirmgitter (106A, 106B), die an der zweiten Ausgangsöffnung angeordnet sind, aufweist, wobei das System ferner Einrichtungen (108, 112) zum Einstellen jeweiliger elektrischer Felder zwischen dem ersten Beschleunigungsgitter und dem ersten Schirmgitter und zwischen dem zweiten Beschleunigungsgitter und dem zweiten Schirmgitter aufweist, und wobei das System zum Ausstoßen von Ionen aus der ersten und der zweiten Öffnung in entsprechende, im Wesentlichen antiparallele Richtungen (114, 116) ausgebildet ist.

2. Elektrisches Antriebssystem nach Anspruch 1, worin die Einrichtungen zum Einstellen der jeweiligen Felder eine Einrichtung zum Halten des ersten und des zweiten Schirmgitters auf einem konstanten Potential und Einrichtungen zum Einstellen der Potentiale von erstem und zweitem Beschleunigungsgitter unabhängig voneinander aufweisen.

3. Elektrisches Antriebssystem nach Anspruch 2, worin die Einrichtung zum Halten von erstem und zweitem Schirmgitter auf einem konstanten Potential eine Spannungsversorgung aufweist, die sowohl mit dem ersten als auch mit dem zweiten Schirmgitter verbunden ist.

4. Elektrisches Antriebssystem nach einem der Ansprüche 1 bis 3, worin entweder das erste Schirmgitter oder das zweite Schirmgitter mit einer Gitterverschließeinrichtung ausgestattet ist, die zum Ermöglichen eines Öffnens und eines Schließens von Öffnungen des Schirmgitters ausgebildet ist.

5. Elektrisches Antriebssystem nach einem der Ansprüche 1 bis 3, worin sowohl das erste Schirmgitter als auch das zweite Schirmgitter mit einer jeweiligen Gitterverschließeinrichtung ausgestattet sind, die zum Ermöglichen eines Öffnens und eines Schließens von Öffnungen des ersten und des zweiten Schirmgitters ausgebildet sind.

6. Elektrisches Antriebssystem nach einem der vorhergehenden Ansprüche, worin die Plasmakammer eine dritte und eine vierte Ausgangsöffnung und ein drittes sowie viertes Beschleunigungsgitter und ein drittes sowie viertes Schirmgitter aufweist, die jeweils an der dritten bzw. vierten Ausgangsöffnung angeordnet sind, wobei das System ferner Einrichtungen zum Einstellen von jeweiligen elektrischen Feldern zwischen dem dritten Beschleunigungsgitter und dem dritten Schirmgitter und zwischen dem vierten Beschleunigungsgitter und dem vierten Schirmgitter aufweist, und wobei das System ausgebildet ist, aus der dritten und der vierten Ausgangsöffnung Ionen in die jeweiligen Richtungen auszustoßen, die im Wesentlichen zueinander antiparallel und zu den Richtungen, in die aus der ersten und der zweiten Ausgangsöffnung Ionen ausgestoßen werden, orthogonal sind.

7. Elektrisches Antriebssystem nach Anspruch 6, worin die Einrichtungen zum Einstellen der elektrischen Felder eine Einrichtung zum Halten der Schirmgitter auf einem konstanten Potential und Einrichtungen aufweisen, um die jeweiligen Potentiale der Beschleunigungsgitter unabhängig voneinander einzustellen.

8. Elektrisches Antriebssystem nach Anspruch 7, worin die Einrichtung zum Halten der Schirmgitter auf einem konstanten Potential eine mit jedem der Schirmgitter verbundene Spannungsversorgung umfasst.

9. Elektrisches Antriebssystem nach einem der Ansprüche 6 bis 8, worin jedes Schirmgitter mit einer Gitterverschließeinrichtung ausgestattet ist, die zum Öffnen und Schließen von Öffnungen des Schirmgitters ausgebildet ist.

10. Elektrisches Antriebssystem nach einem der Ansprüche 4, 5, oder 9, worin jede Gitterverschließeinrichtung eine Anordnung von Ionenblockierelementen aufweist, wobei die Abmessungen eines jeden Ionenblockierelements denen einer Öffnung in dem zugehörigen Schirmgitter gleichen, und wobei die Gitterverschließeinrichtung ferner eine Einrichtung zum Verschieben von Blockierelementen der Anordnung in eine Ausrichtung dieser mit Öffnungen des Schirmgitters und aus einer Ausrichtung dieser mit Öffnungen des Schirmgitters heraus aufweist.

## Revendications

1. Système de propulsion électrique comprenant une chambre à plasma (102) comportant des première (103) et deuxième (105) ouvertures de sortie, des premières grilles d'accélération et écran (104A, 104B) situées au niveau de la première ouverture de sortie et des deuxièmes grilles d'accélération et écran (106A, 106B) situées au niveau de la deuxième ouverture de sortie, le système comprenant en outre un moyen (108, 112) pour régler des champs électriques respectifs entre les premières grilles d'accélération et écran et entre les deuxièmes grilles d'accélération et écran, et dans lequel le système est agencé pour l'expulsion d'ions à partir des première et deuxième ouvertures dans des directions respectives (114, 116) qui sont sensiblement antiparallèles.

2. Système de propulsion électrique selon la revendication 1, dans lequel le moyen pour régler lesdits champs électriques respectifs comprend un moyen pour maintenir les première et deuxième grilles écrans à un potentiel constant et un moyen pour régler indépendamment les potentiels des première et deuxième grilles d'accélération.

3. Système de propulsion électrique selon la revendication 2, dans lequel le moyen pour maintenir les première et deuxième grilles écrans à un potentiel constant comprend une alimentation électrique connectée aux première et deuxième grilles écrans.

4. Système de propulsion électrique selon une quelconque des revendications 1 à 3, dans lequel la première grille écran ou la deuxième grille écran est pourvue de moyens de fermeture de grille agencés pour permettre l'ouverture et la fermeture d'ouvertures de cette grille écran.

5. Système de propulsion électrique selon une quelconque des revendications 1 à 3, dans lequel la première grille écran et la deuxième grille écran sont pourvues de moyens respectifs de fermeture de grille agencés pour permettre l'ouverture et la fermeture d'ouvertures des première et deuxième grilles écrans.

6. Système de propulsion électrique selon une quelconque revendication précédente, dans lequel la chambre à plasma comporte des troisième et quatrième ouvertures de sortie et des troisième et quatrième grilles d'accélération et écran situées au niveau des troisième et quatrième ouvertures de sortie respectivement, le système comprenant en outre un moyen pour régler des champs électriques respectifs entre les troisièmes grilles d'accélération et écran et entre les quatrièmes grilles d'accélération et écran, et dans lequel le système est agencé pour l'expulsion d'ions à partir des troisième et quatrième ouvertures de sortie dans des directions respectives qui sont sensiblement antiparallèles et sensiblement orthogonales aux directions dans lesquelles des ions sont expulsés des première et deuxième ouvertures de sortie.

7. Système de propulsion électrique selon la revendication 6, dans lequel le moyen pour régler lesdits champs électriques comprend un moyen pour maintenir les grilles écrans à un potentiel constant et un moyen pour régler indépendamment les potentiels respectifs des grilles d'accélération.

8. Système de propulsion électrique selon la revendication 7, dans lequel le moyen pour maintenir les grilles écrans à un potentiel constant comprend une alimentation électrique connectée à chaque grille écran.

9. Système de propulsion électrique selon une quelconque des revendications 6 à 8, dans lequel chaque grille écran est pourvue d'un moyen de fermeture de grille agencé pour permettre l'ouverture et la fermeture d'ouvertures de cette grille écran.

10. Système de propulsion électrique selon une quelconque des revendications 4, 5 ou 9, dans lequel chaque moyen de fermeture de grille comprend un réseau d'éléments de blocage d'ions, chaque élément de blocage d'ions possédant des dimensions similaires à celle d'une ouverture dans la grille écran correspondante et dans lequel le moyen de fermeture de grille comprend en outre un moyen pour déplacer des éléments de blocage du réseau dans et hors d'alignement avec des ouvertures dans la grille écran.
